# EUROPEAN PATENT SPECIFICATION

(11) **EP 1 934 926 B1**
(45) Date of publication and mention of the grant of the patent: **01.07.2020**
(21) Application number: 06744718.5
(22) Date of filing: 17.05.2006
(51) Int. Cl.: G09B 19/18, A45D 40/30, G06Q 99/00

(54) **QUALITY CONTROLLED ARTIFICIAL EYELASHES EXTENSION SYSTEM**
QUALITÄTSKONTROLLIERTES SYSTEM FÜR KÜNSTLICHE WIMPERNVERLÄNGERUNGEN
SYSTEME DE PROLONGATION DES CILS PAR DES CILS ARTIFICIELS A CONTROLE DE QUALITE

(30) Priority: 30.08.2005 US 712757 P; 30.03.2006 US 743948 P; 26.04.2006 US 380277
(43) Date of publication of application: 25.06.2008
(73) Proprietor: Novalash Inc., Houston, TX 77027 (US)
(72) Inventor: MERSZEI, Sophy, Houston, TX 77027 (US)
(74) Representative: Beck Greener LLP
(86) International application number: PCT/IB2006/001293
(87) International publication number: WO 2007/026196

(56) References cited:
- US-A- 1 831 801
- US-A- 5 971 763
- US-A- 6 029 674

## Description

### Continuity Data

The present application claims the benefit of prior filed US Provisional Patent Application serial nos. 60/712,757 filed 30 August 2005 and 60/743,948 filed 30 March 2006, and US Utility Application serial no. 11/380,277 filed 26 April 2006.

### Field of the Invention

The present invention is in the field of cosmetic materials and the education and demonstration of their proper use. More specifically, the present invention relates personal grooming and artificial eyelashes adapted for attachment on hair growing from an eyelid, and the education and demonstration of how to properly practice the invention.

### BACKGROUND OF THE INVENTION

The cosmetic use of artificial eyelashes by persons in the making of their toilet is old in the art. Because cosmetic compositions and materials are typically intended for use by persons, it is important that the cosmetic materials and composition be clearly suitable for human use, and that the materials and methods used be very simple to practice, or that they be designated and controlled for practice by individuals trained in their safe application, especially adhesive compositions and solvents. This is particularly important for cosmetic products intended for use in the area of a subject's eyes because of the sensitive and delicate nature of the organs and tissues involved. So, it is important in the field to provide materials and compositions appropriate for human use, and also important to provide education and training in the proper use of such materials and compositions.

Typically, artificial eyelashes are applied as a group or cluster to the skin of a wearer's lower and/or upper eyelid. Some examples include US patent publication no. 2005/0061341 to Choe. US patent publication no. 2002/0056465 to Shin and U.S. Pat. No. 6,029,674 to Han. The field has even been motivated to combine the cosmetic effect of artificial eyelashes and eyeliner, as in U.S. Pat. No. 4,029,111 to Barton. In addition to adhering other decorative cosmetic devices such as glitter flakes, costume gems, etc. to the skin of the wearer's eyelids is also known in the field to adhere decorative devices to a subject's eyelashes, as illustrated in US patent publication no. 2003/0005941 to losilevich. However, these references to not teach or disclose the application of artificial eyelashes to the existing natural eyelashes of a subject wearer.

The cosmetics field has recognized the importance of training and training aids to the skills of well qualified practitioners, and has been motivated to develop such training aids. For example, see U.S. Pat. No. 5,971,763 to Yau for a teaching method and a teaching aid. US-A-1,831,801 describes a method for applying single artificial eyelashes to eyelash hairs by dipping the artificial eyelashes one by one into an adhesive and holding these against the natural eyelash until the adhesive dries. Collodion is used if a water insoluble adhesive is desired and a solution of gum arabic otherwise. The field has also embraced the principle of training and certifying practitioners of certain of the cosmetic arts to one degree or another as required under the authority of various local jurisdictions, or by the industry itself. Therefore, when a new cosmetic procedure becomes available that may represent some level of risk to a subject, it would be beneficial to have a means of controlling the quality of the practitioners involved with the new procedure and the quality of the materials and compositions used in the procedure.

### Summary of the Invention

The present invention is in the field of cosmetics that serve to modify or improve the appearance of a physical feature of the human countenance, and the methods and materials for their safe use. Specifically, the present invention is a quality controlled artificial eyelashes extension system. In part, the system provides for the application of the artificial lash hairs onto the existing natural eyelashes of a human subject to extend the length of the natural eyelash. By this feature, the present eyelash extensions differ from typical false eyelashes, in that the present lash hairs correspond (are attached to) an existing natural eyelash.

The quality control feature of the present lash extension system resides in its assurance that the practitioners of the system are appropriately trained, and the consumable materials utilized by the system safe for use on humans. The system provides for quality control assurance of practitioners and of consumable materials by having programs for practitioner training and certification, and a program for materials quality assurance which controls the quality of the system's consumable materials and makes such materials available to practitioners.

The present eyelash extensions are a fun and safe alternative to mascara or false lashes, but consumers and professionals should follow some basic guidelines when choosing both the product and a practitioner to install the product, a care that may not be obvious to the ordinary consumer when choosing a lash extension product. The present system alleviates this need for such care.

Generally, the present quality controlled artificial eyelashes extension system comprises a system administrator, practitioner training and certification programs, and a materials quality control program. The system administrator component provides the oversight to implement the quality control assurance of the system's practitioners and consumable material according to a quality assurance criteria. The training program provides for the education of a practitioner of the system. Practitioners of the system are individuals trained in proper practice of the method of the system for applying artificial lash hairs on a hair-by-hair basis to a human subject's individual eyelashes, and in the proper use of approved artificial eyelashes materials. The training program provides for the quality control assurance that appropriate training to practice the method and to use the approved artificial eyelashes materials in a manner safe on the human subject is available to a participant. The certification program provides for several quality assurance features of the present system, including certifying: that a participant has successfully completed a training program in the method of the present artificial eyelashes system; whether the participant's training status is current; and that the participant is authorized to utilize the system's approved artificial eyelashes materials. The materials quality control program assures the system's consumable artificial eyelashes materials comply with a materials and composition quality criteria, and makes the quality assured consumable materials available to practitioners.

### Brief Description of the Drawings

Fig. 1 is a flow chart illustrating the quality controlled artificial eyelashes extension system of the present invention.
Fig. 2 is a process flow chart illustrating an overview of the method of the present system.
Figs. 3A and 3B respectively are photographic images illustrating a live workshop component of the training program and an instructional video media component of the training program.
Figs. 4A and 4B respectively a top plan view of a lash patch stored on a backing sheet, and a photographic image illustrating positioning and use of the lash patch on a subject.
Fig. 5A is a photographic image illustrating a training kit and its contents.
Fig. 5B is a photographic image of a subject undergoing the application of lash extensions to existing natural eyelashes.
Fig. 5C is a photographic image of the present quality assured safe adhesive and containers of the present lash extension hairs.
Fig. 6 is a top plan drawing of an exemplary layout for a kit container of the present invention.
Fig. 7 is a perspective drawing of an exemplary single use foil/film packet for containing and dispensing either the glue or the solvent of the present invention.

### Detailed Description of the Invention

Referring now to the drawings, the details of preferred embodiments of the present invention are graphically and schematically illustrated. Like elements in the drawings are represented by like numbers, and any similar elements are represented by like numbers with a different lower case letter suffix.

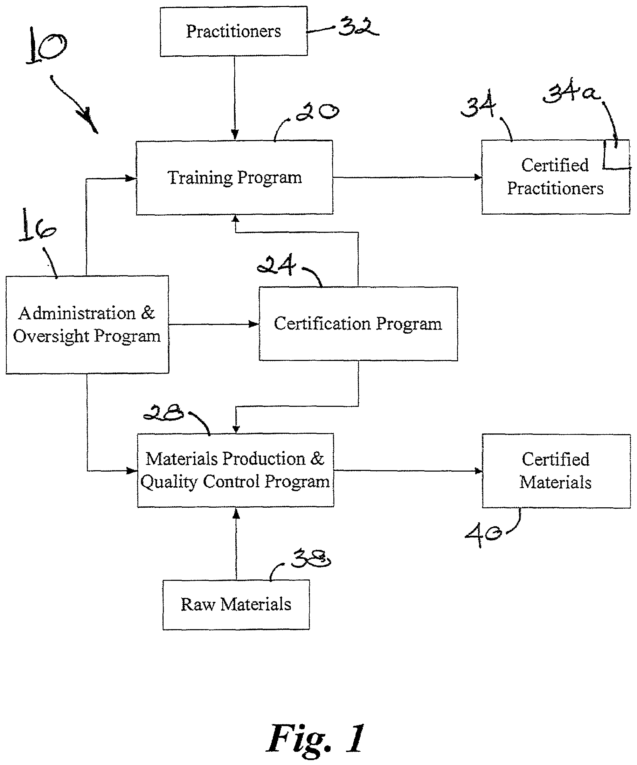

As illustrated in Fig. 1, the present invention is an artificial eyelashes extension system 10 providing certified practitioners 34 and consumable materials 40 quality assured for human use. Because the system 10 is intended for human use, the health and safety aspects of the system 10 and its component parts are a feature of the present invention. In the preferred embodiment illustrated, the quality controlled artificial eyelashes extension system 10 comprises a number of program components and inputs and outputs of people and materials. The present system 10 includes a number of program components, and has inputs of people (trainee-practitioner) 32 and raw materials 38 and outputs of certified practitioners 34 and quality assured materials 40. See Table I.

| **TABLE 1:** System Program Components | |
|---|---|
| Administration Program | Provides oversight of System operations and implementation of System Programs |
| Training Program | Provides education and training to participants in the proper use of the System's methods and materials |
| Practitioner Certification Program | Provides for certifying that participants and materials meet the System's quality assurance criteria |
| Materials QC Program | Provides quality assurance of the consumable materials used to practice the System's methods |
| Practitioner/Trainee (input) | Persons entering the Training Program |
| Certified Practitioners (output) | Persons successfully completing the Training Program |
| Raw Materials (input) | Raw materials entering Material QC Program |
| QC Materials (output) | Quality assured materials for use by Practitioner |

The system administrator/administration program 16 provides management and oversight of the other programs of the system 10 and functions to implement the quality control assurances of the system's certified practitioners 34 and consumable material 40 according to a quality assurance criteria (ISO 9000). In the preferred embodiment illustrated, the present system 10 also includes a training program 20, a certification program 24, and a materials quality control program 28. Quality assured consumable materials 40 are accomplished by processing raw materials 38 at a facility that has met National Quality Assurance (NQA) certification under ISO 9000 standards. The inputs to the system 10 comprise "untrained" persons 32 and raw materials 38. Outputs from the system include persons who are certified practitioners 34 and certified consumable materials 40.

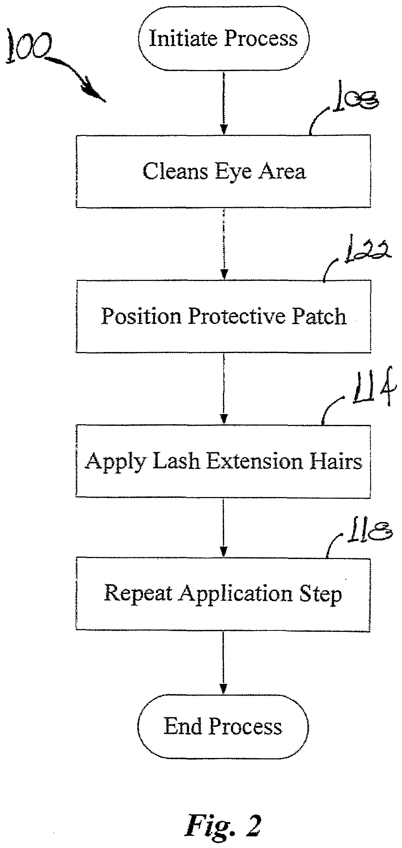

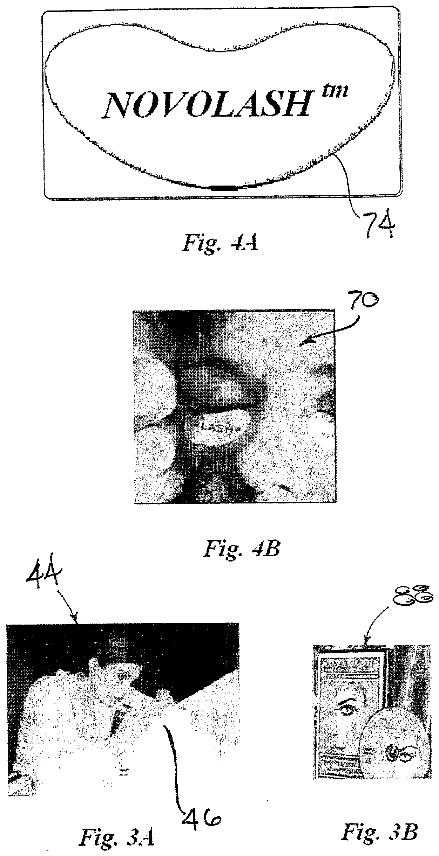

The training program 20 provides instructions and training to persons 32 who desire to enter the system 10 and become a certified practitioner 34 of the present lashes extension system 10. Such "untrained" persons 32 may be cosmetologists or other beauty/cosmetics professionals, or existing practitioners seeking to up grade their education in the field or to up date their certification. The training program 20 provides trainees with instructions in the proper practice system's lash extension method 100 (see Fig. 2). The training program 20 can be implemented by using instructional materials selected from any one or more of a number of educational means. Such instructional materials include: video media 88 (see Fig. 3B) having participant training material included therein, live workshop training sessions 44 (see Fig. 3A), video-conferencing training sessions, multi-media training courses, and self-training kits.

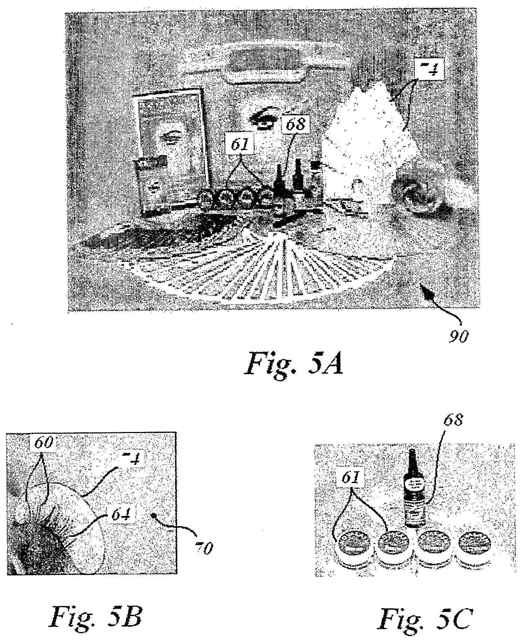

In the preferred embodiment illustrated, the training program 20 was implemented not only using live workshop training sessions 44, but also with self-starter/self-training kits 90 (see Fig. 5). A starter training kit 90 containes all the items required for a professional in the field to get started. Each kit 90 serviced approximately 200 client subjects when used properly. A typical self-training kit 90 contained: an instructional DVD 88; containers 61 of three different lengths of lash Extension hairs 60: 8mm, 10mm, 12mm; surgical quality stainless steel fine point forceps - straight and curved; double-sided glue dipping trays/dishes; a lash comb and brush; pharmaceutical grade, non-fume adhesive 68; adhesive remover; air blower for accelerating curing of the adhesive; shaped lower lash protectors 74; medical tape for sensitive skin; aftercare instructions; and explanatory product brochures for subjects.

Also, the preferred embodiment utilizing workshop training sessions 44 and self-training kits 90 further comprises a testing means for assessing a participant's successful completion of the training program 20. Additionally, in the preferred embodiment, the training program instructional materials included an artificial human countenance 46 on which to practice the method 100 of the present system 10 for applying artificial eyelash extensions 60.

The workshop training sessions 44 comprised a 6-7 hour high intensity workshop. The course included a theory section from a workbook, and discussed not only the basic extension method 100, but also the science behind the method 100, health and safety issues and some advanced practices. At the completion of the lecture portion of the training workshop 44, trainees were required to take the theoretical part of the certification test. During the practicum portion of the workshop 44, trainees practiced the extension method 100 on an artificial human countenance 46 (a mannequin head) as well as on live human models. Class size was kept small to ensure that each participant received personalized instruction and attention from the trainer.

The artificial eyelash extension method 100 of the present system provides for applying artificial lash hairs 60 on a hair-by-hair basis to a human subject's individual eyelashes 64 in a manner safe for the human subject 70. The present lash extensions system 10 is currently for professional use only. At home use or use by non-professionals currently is not recommended, as it may result in damage to eyes or loss of vision. Generally, the steps of the method include:
- cleansing 108 the area of the subject's eyes with mild cleanser prior to application. Note: use of eye makeup removers containing PEG (polyethylene glycol), propylene glycol, or any other glycol-based ingredients can result in failure of lash hairs 60 to bond.
- applying 114 artificial lash extension hairs 60 on a hair-by-hair basis to the human subject's individual eyelashes 64, using a low/non-blooming, oil and water resistant adhesive 68 consisting of 100% pure U.S. Pharmaceutical Grade ingredients. Note: a preferred adhesive/glue 68 of the present system 10 was high viscosity, low-blooming and low-fuming, and contained a black pigment/colorant. The intended viscosity of the glue 68 is between about 800 and 2000 cP. In the preferred embodiment of the figures, the glue 68 was an ethoxyethyl cyanoacrylate based composition.
- repeating 118 the applying step 114 an appropriate number of times to have applied at least one artificial lash hair extension 60 to a desired number of the subject's existing natural eyelashes 64. Note: not every one of the subject's natural eyelashes 64 may need to have an extension lash hair 60 adhered to it, and more than one extension lash hair 60 may be attached to the same existing natural eyelash 64. The desired density of artificial lash extension hairs 60 in a particular subject's case is a personal preference and is determinable by one of ordinary skill in the art.

In the preferred embodiment illustrated in Fig. 5B, after the cleansing step 108, a site preparation step was practiced. The site preparation step comprised: positioning 122 an eyelid separating film or patch 74 over the eyelashes and adjacent eyelid rim of an (usually lower) eyelid (not being worked on) that is to be separated from the eyelashes of the eyelid being worked on. The eyelid separating patch 74 is a very easy and economical way to protect and separate, for example, the lower eyelid's lashes from the upper eyelids lashes while the latter are being worked on. See Fig. 4B. The patch/film 74 has a hypo-allergenic adhesive film (not shown) that adheres lightly to the delicate skin of the eye area, and is removable without pulling the skin or dislodging healthy eyelashes.

A subject 70 must take care to not rub or scratch the eyes after application of the artificial lash extensions 60. Also, after the extensions 60 are adhered to the subject's natural eyelashes 64, only NON-waterproof mascara may be used. Use of waterproof mascara can cause lashes to loosen. Repeated use of even water soluble mascara may shorten the life of the lash extensions 60. Use of eye makeup removers containing PEG (polyethylene glycol), propylene glycol or any other glycol-based ingredients can result in failure of lash hairs bonds. Eye creams, eye makeup remover and facial moisturizers containing oils or solvents can cause the lash extensions 60 to loosen. Therefore, it is recommended that eye creams be used sparingly and to avoid the lash line area.

The present artificial eyelashes extension system 10 provides for the lengthening and thickening of a subject's eyelashes 64. Applying the individual artificial lash hairs 60 on a hair-by-hair basis to the subject's own lashes 64 provides a totally natural look. When properly applied the present eyelash extensions 60 can last up to two months or more. Touch-ups are recommended after initial full set application to replace any lash extension hairs 60 that might may be dislodged or fall off because they were attached to a "beyond maturity natural" existing natural eyelash 64. An important object of the present system 10 is to provide safe lash extensions that when properly applied will last for the length of the natural growth cycle of each eyelash of the subject to which the extensions are attached.

The certification program 24 provides for the certification of persons 32 that successfully complete a training program 20 of the system 10, and provides a hardcopy certificate 34a to such participant. The certificate 34a evidences to the public and to interested subjects that the certified practitioner 34 has successfully completed a system training program and is authorized to utilize the system's approved artificial eyelashes materials. The certificate 34a can also evidence the level of training of the certified participant 34 and whether the participant's training is current. The certification program 24 is also responsible for certifying that the consumable artificial eyelashes materials 40 provided under the egis of the system 10 meet the appropriate quality assurance criteria.

The materials quality control program 28 provides that the system's products are produced from the raw materials in a manner consistent with the system's ISO 9000 quality assurance criteria. This is accomplished as noted above, by having critical compositions formulated using USP grade materials in a National Quality Assurance (NQA) certified facility.

The adhesive 68 of the present invention is surgical quality and approved for use in the eye area of humans. To the contrary, most lash adhesives currently produced and imported from Asia are industrial quality adhesives that are not FDA approved for cosmetic or medical applications. For example, many black pigmented cyanoacrylate adhesives were originally formulated with the automotive industry in mind, and can contain impurities that are not safe for use on humans. It is a feature of the adhesive 68 of the present invention that its ingredients are "USP" or "U.S. Pharmaceutical Grade- Class IV." This means that the adhesive is pure, medical quality surgical glue, and is safe for use on the eye area. Generally, a patch test is not required to check for skin reaction, because the lashes and glue are intended to not come in contact with skin the subject's skin. The adhesive/glue 68 of the present invention is high viscosity, low blooming and low fuming and contains a black pigment/colorant. The intended viscosity of the glue is between about 800 and 2000 cP. In a preferred embodiment, the glue was an ethoxyethyl cyanoacrylate based composition, having the physical characteristics noted above. An example of base glue composition practicable in the present invention is Apollo S100™ (Cyberbond, Ltd, www.cyberbond.com).

It is intended that the practice of the present system 10 be carried out by a licensed cosmetologist, esthetician, permanent makeup technician or beautician. Further, it is intended in the present system 10 the such practitioner be specifically certified to provide lash extension services using system 10. An instructional video is provided with the kit of the present invention as well as instructional material in the kit itself. Additionally, as part of the certification to practice the present system, it is intended that 5-10 practice sessions are required before certifying practitioners to use the present system 10.

In a preferred embodiment of the kit 90 of the present system, one kit will provide approximately 200 subject applications when used properly. Only one drop of glue is required per client, and 30 to 40 lashes. To provide this many applications for different subjects and to create a more natural, feathery, thick look, the preferred embodiment of the kit includes three lengths of individual artificial eyelashes. Longer lashes can be used towards the center or at the corner of the eye, depending on a subject's style preference.

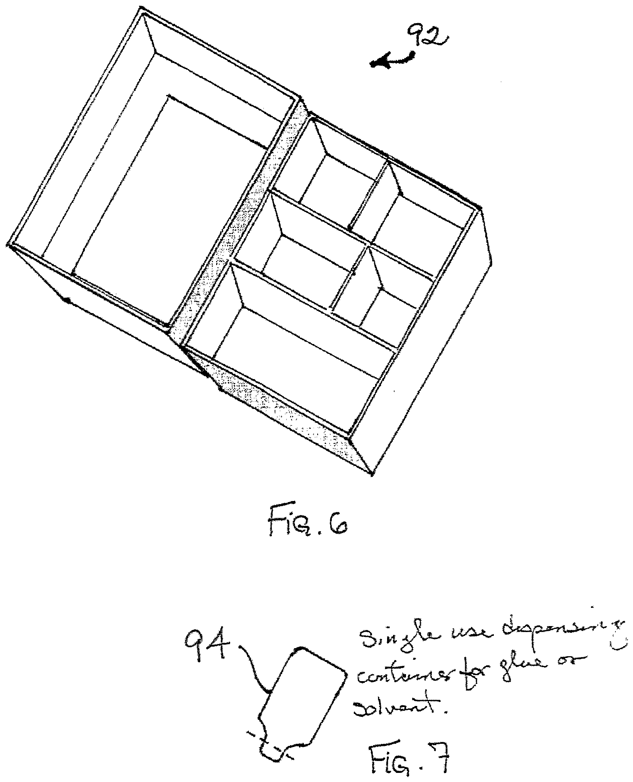

As shown in Fig. 6, an artificial eyelashes kit for use on humans with the present artificial eyelash extension system 10 includes a lidded housing 92 for holding all of the other components of the kit. In a preferred embodiment of the kit, the lidded housing 92 was compartmented to hold similar components together, but separate from other different components and was closeable by means of the lid. The kit contained a plurality of single artificial eyelashes such as are known in the field. A supply of a specific length of single artificial eyelashes was stored in an eyelash container. A plurality of eyelash containers were included in the kit for storing a selection of different length individual eyelashes.

At least one implement 82 such as forceps or tweezers for grasping and manipulating an individual artificial eyelash in included in the kit. Preferably, more that one such implement is included. Such implements are known in the field and selectable by one of ordinary skill for use in the present kit. At least one dispensing container of a fast-drying glue for adhering the individual eyelashes to a subject's existing eyelashes is included in the kit. In a preferred embodiment, a plurality of single use dispensing containers 94 are supplied with the kit. See Fig. 7.

The preferred kit further included: a grooming tool 84 useful for manipulating the subject's existing eyelashes to facilitate proper application of the individual eyelash, and a plurality of eyelid contour patches. The eyelid contour patches had an adhesive on one side and were useful to provide a surface for separating the upper eyelid lashes from the bottom eyelid lashes during application of individual lashes to one or the other eyelids, but especially when applying individual lashes to the upper eyelid. As noted above, the kit also included instructions on the proper practice of the invention to apply the artificial eyelashes on humans.

In the preferred embodiment, the artificial eyelashes kit further included at least one dispensing container of eyelash remover to dissolve the glue adhering the artificial eyelashes to the subject's eyelashes. Such solvent are known in the art and in view of the present disclosure are selectable by the ordinary skilled artisan for practice in the present invention. An example of such a remover solvent is "UNDO 6020"™ (Cyberbond; www.cyberbond.com). The instructions included the proper practice of the invention to remove the artificial eyelashes on humans.

Optionally, the kit may contain other components as desired to further facilitate practice of the invention on humans. These include a number of components useful for their ordinary purposes in the field of cosmetology, such as make-up brushes, a suction bulb useful for providing a gentle stream of air to enhance drying time of the glue as well as its other ordinary uses in cosmetology, and cotton swabs. A roll of plastic medical adhesive tape can be included as an alternative to the eyelid contour patches, and a number of petri dish type vessels can be included as secondary holders for smaller more manageable number of individual artificial eyelashes. Additionally, in a preferred embodiment, a mirror was mounted on the inside of the lid of the lidded housing.

While the above description contains many specifics, these should not be construed as limitations on the scope of the invention, but rather as exemplifications of one or another preferred embodiment thereof. Many other variations are possible, which would be obvious to one skilled in the art. Accordingly, the scope of the invention should be determined by the scope of the appended claims and their equivalents, and not just by the embodiments.

## Claims

1. A cosmetic method (100) for adhering artificial eyelashes (60) to human eyelashes (64), the method comprising:
Positioning (122) an eyelid separating film patch (74) to cover one of an upper or lower set of existing human eyelashes and skin adjacent an eyelid rim of an eye in need of artificial eyelashes, thereby separating the covered upper or lower set of existing human eyelashes from the other of the upper or lower set of existing human eyelashes (64) of the eye in need of artificial eyelashes (60) and protecting the skin from an adhesive;
adhering (114) a single artificial eyelash hair to a single human eyelash hair of the other of the upper or lower set of human eyelashes on a hair-by-hair basis using the adhesive (68); and
repeating (118) the adhering step to apply at least one single artificial eyelash to a desired number of single human eyelashes of the other of the upper or lower set of human eyelashes to extend the human eyelashes on a hair-by-hair basis,
**characterised in that** the adhesive comprises cyanoacrylate and a pigment and having a viscosity between about 800 and 2000 cP for conferring high viscosity, low blooming and low fuming properties.

2. The cosmetic method (100) of claim 1, further comprising providing a kit (90) containing quality-assured consumable artificial eyelash materials, the kit comprising: (i) a housing (92) for holding components of the kit; (ii) a plurality of single artificial eyelash hairs (60); (iii) at least one implement (82) for grasping and manipulating at least one artificial eyelash hair; (iv) an adhesive (68) for adhering the plurality of single artificial eyelash hairs to human eyelash hairs (64) on a hair-by-hair basis; (v) a grooming tool (84) for manipulating the human eyelash hairs for proper application of the plurality of single eyelash hairs; and (vi) at least one adhesive strip having an adhesive on one side.

3. The cosmetic method (100) of claim 2, wherein the kit (90) further comprises an artificial eyelash hair remover, the artificial eyelash hair remover being adapted to dissolve the adhesive (68) adhering the single artificial eyelash hairs (64) to the single human eyelash hairs (60).

4. The cosmetic method (100) of claim 2, wherein the kit (90) further comprises a plurality of eyelash containers for storing the plurality of single artificial eyelash hairs (60), at least one dispensing container (94) for dispensing an adhesive, and instructions for adhering the plurality of single artificial eyelash hairs to the plurality of single human eyelash hairs (64).

5. The cosmetic method (100) of any one of claims 2 to 4, wherein the kit (90) further comprises instructions for removing at least one artificial eyelash hair from the single human eyelash hair.

6. The cosmetic method (100) of any of claims 1 to 5, further comprising cleansing an area around a human eye in need of artificial eyelash hairs (60) with a cleanser.

7. The cosmetic method (100) of claim 6, wherein the cleanser is free of polyethylene glycol, propylene glycol, and other glycol-based ingredients.

8. The cosmetic method (100) of any one of claims 2 to 5, wherein the adhesive strip is an eyelid contour patch, an adhesive tape, or a combination thereof.

9. A kit (90) for adhering artificial eyelash hairs to human eyelashes, the kit comprising:
a plurality of single artificial eyelash hairs (60) suitable for application on human eyelash hairs on a hair-by-hair basis; and
an adhesive (68) for adhering the plurality of single artificial eyelash hairs to human eyelash hairs (60) on a hair-by-hair basis;
**characterised in that** the adhesive comprises a cyanoacrylate and a black pigment and has a viscosity between about 800 and 2000 cP for conferring high viscosity, low blooming and low fuming properties, and the kit comprises:
a housing (92) having a closeable lid and compartments to separate components;
at least one implement (82) for grasping and manipulating at least one artificial eyelash hair;
a grooming tool (84) for manipulating the human eyelash hairs for proper application of the plurality of single artificial eyelash hairs; and
a plurality of eyelid contour patches, wherein each eyelid contour patch in the plurality of eyelid contour patches has an adhesive on one side.

10. The kit (90) of claim 9, wherein the kit further comprises an artificial eyelash hair remover, the artificial eyelash hair remover being adapted to dissolve the adhesive (68) adhering the single artificial eyelash hair to the single human eyelash hair.

11. The kit (90) of any one of claims 9 or 10, wherein the kit further comprises instructions for removing the single artificial eyelash hair from the single human eyelash hair.

12. The kit (90) of claim 9, further comprising a plurality of eyelash containers for storing the plurality of single artificial eyelash hairs, at least one dispensing container (94) for dispensing an adhesive (68), and instructions for adhering the plurality of single artificial eyelash hairs (60) to the plurality of single human eyelash hairs (64) on a hair-by-hair basis.

13. Use of the kit (90) of any one of claims 9 to 12 for adhering a plurality of single artificial eyelash hairs (60) to a plurality of single human eyelash hairs (64) on a hair-by-hair basis.

14. An eyelash extension, comprising a single artificial eyelash hair bonded with an adhesive composition (68), wherein the single artificial eyelash hair is configured to be adhered to a single natural eyelash hair and wherein the adhesive composition comprises a cyanoacrylate glue compound, a pigment, a thickening agent which adapts the eyelash extension adhesive to have a viscosity between about 800 and 2000 cP, and a ductility agent.

15. The extension of claim 14, wherein the pigment is a black pigment.

## Patentansprüche

1. Kosmetisches Verfahren (100) zum Ankleben künstlicher Wimpern (60) an menschliche Wimpern (64), wobei das Verfahren Folgendes umfasst:
Positionieren (122) eines Filmpflasters (74) zur Trennung von Augenlidern zum Abdecken eines oberen oder unteren Satzes vorhandener menschlicher Wimpern und Haut neben einem Augenlidrand eines Auges, das künstliche Wimpern benötigt, wodurch der bedeckte obere oder untere Satz vorhandener menschlicher Wimpern von dem anderen des oberen oder unteren Satzes bestehender menschlicher Wimpern (64) des Auges getrennt wird, das künstliche Wimpern (60) benötigt, und die Haut vor einem Klebstoff geschützt wird;
Ankleben (114) eines einzelnen künstlichen Wimpernhaars an ein einzelnes menschliches Wimpernhaar von dem anderen des oberen oder unteren Satzes menschlicher Wimpern Haar für Haar unter Verwendung des Klebstoffs (68); und
Wiederholen (118) des Klebeschritts zum Anbringen mindestens einer einzelnen künstlichen Wimper an einer gewünschten Anzahl einzelner menschlicher Wimpern von dem anderen des oberen oder unteren Satzes menschlicher Wimpern, um die menschlichen Wimpern Haar für Haar zu verlängern,
**dadurch gekennzeichnet, dass** der Klebstoff Cyanoacrylat und ein Pigment umfasst und eine Viskosität zwischen etwa 800 und 2000 cP aufweist, um Eigenschaften zu verleihen, die durch hohe Viskosität, niedriges Ausblühen und geringe Rauchentwicklung gekennzeichnet sind.

2. Kosmetisches Verfahren (100) nach Anspruch 1, ferner umfassend ein Bereitstellen eines Kits (90), das qualitätsgesicherte, verbrauchbare, künstliche Wimpernmaterialien enthält, wobei das Kit Folgendes umfasst: (i) ein Gehäuse (92) zum Aufnehmen der Komponenten des Kits; (ii) eine Vielzahl von einzelnen künstlichen Wimpernhaaren (60); (iii) mindestens ein Arbeitsgerät (82) zum Ergreifen und Handhaben von mindestens einem künstlichen Wimpernhaar; (iv) einen Klebstoff (68) zum Ankleben der Vielzahl von einzelnen künstlichen Wimpernhaaren an menschlichen Wimpernhaaren (64) Haar für Haar; (v) ein Pflegewerkzeug (84) zum Handhaben der menschlichen Wimpernhaare zum ordnungsgemäßen Anbringen der Vielzahl von einzelnen Wimpernhaaren; und (vi) mindestens einen Klebestreifen, der auf einer Seite einen Klebstoff aufweist.

3. Kosmetisches Verfahren (100) nach Anspruch 2, wobei das Kit (90) ferner einen Haarentferner für künstliche Wimpern umfasst, wobei der Haarentferner für künstliche Wimpern dazu eingerichtet ist, den Klebstoff (68) aufzulösen, der die einzelnen künstlichen Wimpernhaare (64) an die einzelnen menschlichen Wimpernhaaren (60) anklebt.

4. Kosmetisches Verfahren (100) nach Anspruch 2, wobei das Kit (90) ferner eine Vielzahl von Wimpernbehältern zum Lagern der Vielzahl von einzelnen künstlichen Wimpernhaaren (60), mindestens einen Abgabebehälter (94) zum Abgeben eines Klebstoffs und Anweisungen zum Ankleben der Vielzahl von einzelnen künstlichen Wimpernhaaren an der Vielzahl von einzelnen menschlichen Wimpernhaaren (64) umfasst.

5. Kosmetisches Verfahren (100) nach einem der Ansprüche 2 bis 4, wobei das Kit (90) ferner Anweisungen zum Entfernen von mindestens einem künstlichen Wimpernhaar von dem einzelnen menschlichen Wimpernhaar umfasst.

6. Kosmetisches Verfahren (100) nach einem der Ansprüche 1 bis 5, ferner umfassend ein Reinigen eines Bereiches um ein menschliches Auge herum, das künstliche Wimpernhaare (60) benötigt, mit einem Reinigungsmittel.

7. Kosmetisches Verfahren (100) nach Anspruch 6, wobei das Reinigungsmittel kein Polyethylenhlykol, kein Propylenglykol und keine anderen Bestandteile auf Glykolbasis enthält.

8. Kosmetisches Verfahren (100) nach einem der Ansprüche 2 bis 5, wobei der Klebestreifen ein Augenlidkonturpflaster, ein Klebeband oder eine Kombination davon ist.

9. Kit (90) zum Ankleben von künstlichen Wimpernhaaren an menschlichen Wimpern, wobei das Kit Folgendes umfasst:
eine Vielzahl von einzelnen künstlichen Wimpernhaaren (60), die zum Anbringen auf menschlichen Wimpernhaaren Haar für Haar geeignet sind; und
einen Klebstoff (68) zum Ankleben der Vielzahl von einzelnen künstlichen Wimpernhaaren an menschlichen Wimpernhaaren (60) Haar für Haar;
**dadurch gekennzeichnet, dass** der Klebstoff ein Cyanoacrylat und ein schwarzes Pigment umfasst und eine Viskosität zwischen etwa 800 und 2000 cP aufweist, um Eigenschaften zu verleihen, die durch hohe Viskosität, niedriges Ausblühen und geringe Rauchentwicklung gekennzeichnet sind, und das Kit Folgendes umfasst:
ein Gehäuse (92), das einen verschließbaren Deckel und Fächer zum Trennen von Komponenten aufweist;
mindestens ein Arbeitsgerät (82) zum Ergreifen und Handhaben von mindestens einem künstlichen Wimpernhaar;
ein Pflegewerkzeug (84) zum Handhaben der menschlichen Wimpernhaare zum ordnungsgemäßen Anbringen der Vielzahl von einzelnen künstlichen Wimpernhaaren; und
eine Vielzahl von Augenlidkonturpflastern, wobei jedes Augenlidkonturpflaster in der Vielzahl von Augenlidkonturpflastern auf einer Seite einen Klebstoff aufweist.

10. Kit (90) nach Anspruch 9, wobei das Kit ferner einen Haarentferner für künstliche Wimpern umfasst, wobei der Haarentferner für künstliche Wimpern dazu eingerichtet ist, den Klebstoff (68) aufzulösen, der die einzelnen künstlichen Wimpernhaare an das einzelne menschliche Wimpernhaar anklebt.

11. Kit (90) nach einem der Ansprüche 9 oder 10, wobei das Kit ferner Anweisungen zum Entfernen des einzelnen künstlichen Wimpernhaars von dem einzelnen menschlichen Wimpernhaar umfasst.

12. Kit (90) nach Anspruch 9, ferner umfassend eine Vielzahl von Wimpernbehältern zum Lagern der Vielzahl von einzelnen künstlichen Wimpernhaaren, mindestens einen Abgabebehälter (94) zum Abgeben eines Klebstoffs und Anweisungen zum Ankleben der Vielzahl von einzelnen künstlichen Wimpernhaaren an die Vielzahl von einzelnen menschlichen Wimpernhaaren (64) Haar für Haar.

13. Verwendung des Kits (90) nach einem der Ansprüche 9 bis 12 zum Ankleben einer Vielzahl von einzelnen künstlichen Wimpernhaaren (60) an eine Vielzahl von einzelnen menschlichen Wimpernhaaren (64) Haar für Haar.

14. Wimpernverlängerung, umfassend ein einzelnes künstliches Wimpernhaar, das mit einer Klebstoffzusammensetzung (68) verbunden ist, wobei das einzelne künstliche Wimpernhaar dazu ausgestaltet ist, an ein einzelnes natürliches Wimpernhaar angeklebt zu werden, und wobei die Klebstoffzusammensetzung eine Cyanoacrylat-Klebstoffverbindung, ein Pigment, ein Verdickungsmittel, das den Wimpernverlängerungsklebstoff so einrichtet, dass er eine Viskosität zwischen etwa 800 und 2000 cP aufweist, und ein Duktilitätsmittel umfasst.

15. Verlängerung nach Anspruch 14, wobei das Pigment ein schwarzes Pigment ist.

## Revendications

1. Procédé cosmétique (100) permettant de coller des cils artificiels (60) sur des cils humains (64), le procédé comprenant :
le positionnement (122) d'un patch de film de séparation des paupières (74) pour couvrir l'un d'un ensemble supérieur ou inférieur de cils humains existants et la peau adjacente au bord d'une paupière d'un œil ayant besoin de cils artificiels, séparant ainsi l'ensemble supérieur ou inférieur couvert de cils humains existants provenant de l'autre de l'ensemble supérieur ou inférieur de cils humains existants (64) de l'œil ayant besoin de cils artificiels (60) et protégeant la peau d'un adhésif ;
le fait de coller (114) un poil de cil artificiel individuel à un poil de cil humain individuel de l'autre de l'ensemble supérieur ou inférieur de cils humains, poil par poil, en utilisant l'adhésif (68) ; et
la répétition (118) de l'étape d'adhésion pour appliquer au moins un cil artificiel individuel à un nombre souhaité de cils humains individuels de l'autre de l'ensemble supérieur ou inférieur de cils humains pour prolonger les cils humains, poil par poil,
**caractérisé en ce que** l'adhésif comprend du cyanoacrylate et un pigment et ayant une viscosité entre environ 800 et 2000 cP pour conférer des propriétés de viscosité élevée, de faible efflorescence et de faible dégagement de fumée.

2. Procédé cosmétique (100) selon la revendication 1, comprenant en outre la fourniture d'un kit (90) contenant des matériaux de cils artificiels de consommation de qualité garantie, le kit comprenant : (i) un étuit (92) permettant de contenir les composants du kit ; (ii) une pluralité de poils de cils artificiels individuels (60); (iii) au moins un instrument (82) permettant de saisir et manipuler au moins un poil de cils artificiel ; (iv) un adhésif (68) permettant de coller la pluralité de poils de cils artificiels individuels aux poils de cils humains (64), poil par poil ; (v) un outil de toilettage (84) permettant de manipuler les poils de cils humains pour une bonne application de la pluralité de poils de cils individuels et (vi) au moins une bande adhésive ayant un adhésif sur un côté.

3. Procédé cosmétique (100) selon la revendication 2, dans lequel le kit (90) comprend en outre un épilateur de cils artificiels, l'épilateur de cils artificiels étant conçu pour dissoudre l'adhésif (68) collant les poils de cils artificiels individuels (64) aux poils de cils humains individuels (60).

4. Procédé cosmétique (100) selon la revendication 2, dans lequel le kit (90) comprend en outre une pluralité de récipients pour cils permettant de stocker la pluralité de poils de cils artificiels individuels (60), au moins un récipient de distribution (94) pour distribuer un adhésif, et des instructions permettent de coller la pluralité de poils de cils artificiels individuels à la pluralité de poils de cils humains individuels (64).

5. Procédé cosmétique (100) selon l'une quelconque des revendications 2 à 4, dans lequel le kit (90) comprend en outre des instructions permettent d'enlever au moins un poil de cil artificiel du poil de cil humain individuel.

6. Procédé cosmétique (100) selon l'une quelconque des revendications 1 à 5, comprenant en outre le nettoyage d'une zone autour d'un œil humain ayant besoin de poils de cils artificiels (60) avec un nettoyant.

7. Procédé cosmétique (100) selon la revendication 6, dans lequel le nettoyant ne contient pas de polyéthylène glycol, de propylène glycol et d'autres ingrédients à base de glycol.

8. Procédé cosmétique (100) selon l'une quelconque des revendications 2 à 5, dans lequel la bande adhésive est un patch de contour des paupières, un ruban adhésif ou une combinaison de ceux-ci.

9. Kit (90) permettant de coller des poils de cils artificiels sur des cils humains, le kit comprenant :
une pluralité de poils de cils artificiels individuels (60) convenant à une application sur des poils de cils humains, poil par poil ; et
un adhésif (68) permettant de coller la pluralité de poils de cils artificiels individuels aux poils de cils humains (60), poil par poil ;
**caractérisé en ce que** l'adhésif comprend du cyanoacrylate et un pigment noir et a une viscosité entre environ 800 et 2000 cP pour conférer des propriétés de viscosité élevée, de faible efflorescence et de faible dégagement de fumée, et le kit comprend :
un étuit (92) ayant un couvercle pouvant être fermé et des compartiments pour séparer les composants ;
au moins un instrument (82) permettant de saisir et de manipuler au moins un poil de cil artificiel ;
un outil de toilettage (84) permettant de manipuler les poils de cils humains pour une bonne application de la pluralité de poils de cils artificiels individuels ; et
une pluralité de patchs de contour des paupières, dans lequel chaque patch de contour des paupières dans la pluralité de patchs de contour des paupières a un adhésif sur un côté.

10. Kit (90) selon la revendication 9, dans lequel le kit (90) comprend en outre un épilateur de cils artificiels, l'épilateur de cils artificiels étant conçu pour dissoudre l'adhésif (68) collant les poils de cils artificiels individuels aux poils de cils humains individuels.

11. Kit (90) selon l'une quelconque des revendications 9 ou 10, dans lequel le kit comprend en outre des instructions pour enlever le poil de cil artificiel individuel du poil de cil humain individuel.

12. Kit (90) selon la revendication 9, comprenant en outre une pluralité de récipients pour cils permettant de stocker la pluralité de poils de cils artificiels individuels (94), au moins un récipient de distribution (94) permettant de distribuer un adhésif, et des instructions permettent de coller la pluralité de poils de cils artificiels individuels à la pluralité de poils de cils humains individuels (64), poil par poil.

13. Utilisation du kit (90) selon l'une quelconque des revendications 9 à 12, permettant de coller une pluralité de poils de cils artificiels individuels (60) à une pluralité de poils de cils humains individuels (64), poil par poil.

14. Extension de cils, comprenant un poil de cil artificiel individuel lié à une composition adhésive (68), dans laquelle le poil de cil artificiel individuel est conçu pour être collé à un poil de cil naturel individuel et dans laquelle la composition adhésive comprend un composé de colle au cyanoacrylate, un pigment, un agent épaississant qui adapte l'adhésif d'extension des cils pour avoir une viscosité entre environ 800 et 2000 cP, et un agent de ductilité.

15. Extension de cils selon la revendication 14, dans laquelle le pigment est un pigment noir.
